(19) Europäisches Patentamt / European Patent Office / Office européen des brevets

(11) **EP 4 354 719 A1**

(12) **EUROPEAN PATENT APPLICATION**
published in accordance with Art. 153(4) EPC

(43) Date of publication:
**17.04.2024  Bulletin 2024/16**

(21) Application number: **22824181.6**

(22) Date of filing: **14.06.2022**

(51) International Patent Classification (IPC):
**H02M 3/335** (2006.01)

(52) Cooperative Patent Classification (CPC):
**H02M 3/335; Y02B 70/10**

(86) International application number:
**PCT/CN2022/098575**

(87) International publication number:
**WO 2022/262702 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.06.2021  CN 202121328038 U
15.06.2021  CN 202110663929**

(71) Applicant: **Thinking Power Technology (Shen Zhen) Limited**
**Shenzhen, Guangdong 518045 (CN)**

(72) Inventor: **WU, Zhenyuan**
**Shenzhen, Guangdong 518000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **DC-DC CONVERTER AND POWER SUPPLY DEVICE**

(57)     Disclosed are a DC-DC converter and a power supply device. The converter includes: a power input end configured to be connected to a direct current power supply; a power output end configured to output power; M bridge arm circuits (10), input ends of the M bridge arm circuits (10) are connected to the power input end; a transformer component (20), primary windings of transformers of the transformer component (20) are connected to center points of the M bridge arm circuits (10); and a rectification and filtering circuit (30), input ends of the rectification and filtering circuit (30) are connected to secondary winding connection ends of the transformer component (20), an output end of the rectification and filtering circuit (30) is connected to the power output end. The M bridge arm circuits (10) and the transformer component (20) are configured to convert the input DC power supply into required voltages on secondary windings of the transformer component (20), and the required voltages are output to the power output end after rectification and filtering by the rectification and filtering circuit (30), where M is greater than or equal to 3.

FIG. 1

**Description**

**CROSS-REFERENCE TO RELATED APPLICATIONS**

The present application claims priority to Chinese Patent Application No. 202121328038.3 and No. 202110663929.2, filed on June 15, 2021, and the entire contents of which are incorporated herein by reference.

**TECHNICAL FIELD**

The present application relates to the technical field of a power supply, and in particular to a DC-DC converter and a power supply device.

**BACKGROUND**

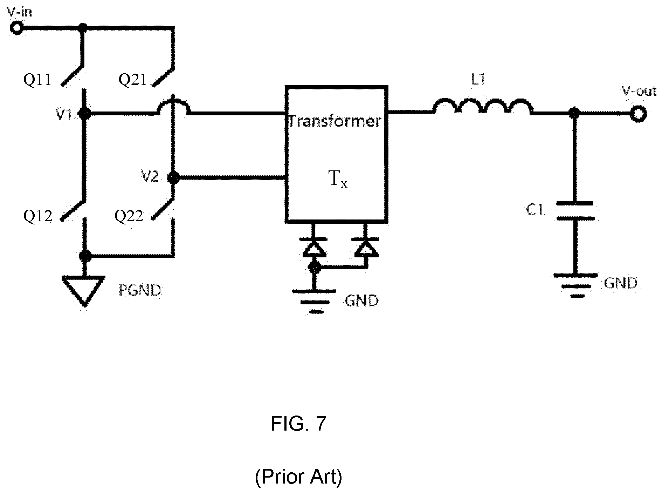

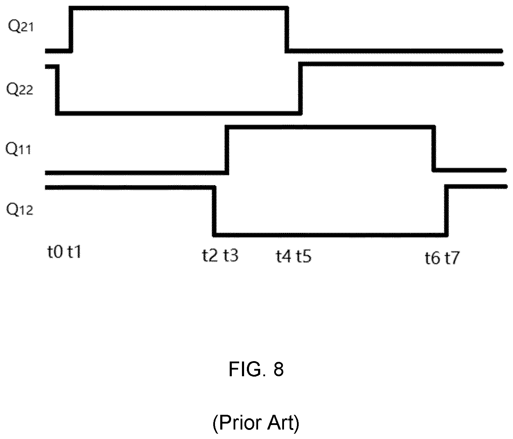

A traditional phase-shift full-bridge architecture adjusts an output voltage by changing a duty cycle. Referring to FIGS. 7 and 8, FIG. 7 is a schematic diagram of a circuit structure of a phase-shift full-bridge DC-DC converter, and FIG. 8 is a timing diagram of a phase-shift full-bridge DC-DC converter. The following analysis is based on the condition where the minimum current of inductor L1 is greater than zero. At time t0, the freewheeling ends, Q22 turns off, leakage inductance of the transformer begins to enter a resonant state, and the voltage at point V2 is charged. At time t1, after the voltage at point V2 reaches its highest point, Q21 is softly turned on. Q21 and Q12 work together, and the secondary side of the transformer outputs energy to the outside after rectification. At time t2, Q12 turns off. The primary side of the transformer current charges V1. At time t3, after the voltage at the point V1 reaches its highest point, Q11 is softly turned on. The output voltage of the transformer is 0. The transformer *Tx*, Q11, and Q21 enter the freewheeling state. Energy is wasted in the transistors and transformer windings in this state. At time t4, freewheeling ends, Q21 turns off, and the leakage inductance of the transformer begins to enter the resonant state, discharging the voltage at point V2. At time t5, after the voltage at point V2 reaches its lowest point, Q22 is softly turned on. Q22 and Q11 work together, and the secondary side of the transformer outputs energy to the outside after rectification. At time t6, Q11 turns off. The primary side current of the transformer discharges the voltage at point V1. At time t7, after the voltage at point V1 reaches its lowest point, Q12 is softly turned on. The output voltage of the transformer is 0. The transformer *Tx*, Q12 and Q22 enter the freewheeling state. Energy is wasted in the transistors and transformer windings in this state.

To cope with instantaneous changes in load, the transformer cannot work at full duty cycle, resulting in the introduction of freewheeling loss.

**SUMMARY**

The main purpose of the present application is to propose a DC-DC converter and a power supply device, aiming to reduce the resistive loss in the bridge arm circuit and the transformer, particularly the freewheeling loss.

To achieve the aforementioned objectives, the present application proposes a DC-DC converter. The DC-DC converter includes a power input end, a power output end, M bridge arm circuits, a transformer component and a rectification and filtering circuit.

The power input end is configured to be connected to a DC power supply.

The power output end is configured to output power.

The input end of M bridge arm circuits is connected to the power input end.

The transformer component includes (M-1) transformers, and the (M-1) transformers are provided with at least 2 transformers with different turns ratios. Each of the transformers includes two primary winding connection ends. One of the primary winding connection ends of the N-th transformer is connected to the bridge arm center point of the N-th bridge arm circuit, and the other primary winding connection end of the N-th transformer is connected to the bridge arm center point of the (N+1)th bridge arm circuit, where $1 \leq N \leq (M-1)$.

The input ends of the rectification and filtering circuit are connected to the secondary winding connection ends of the transformer component. The output end of the rectification and filtering circuit is connected to the power output end.

In this configuration, the M bridge arm circuits and the transformer component are configured to convert the incoming DC power supply into the required voltages on the secondary windings of the transformer component. After rectification and filtering by the rectification and filtering circuit, the required voltages are provided to the power output end, where $M \geq 3$.

In an embodiment, the states of two adjacent transformers are simultaneously changed by altering the status of the switches in the bridge arm circuit to which the two adjacent transformers are commonly connected.

In an embodiment, when one of the (M-1) transformers with at least one end floating starts to operate, the bridge arm circuit in which the magnetizing current flows out in the two bridge arm with center points connected to the primary winding connection ends turns on the lower switch, while the bridge arm circuit in which the magnetizing current flows into in the two bridge arm with center points connected to the primary winding connection ends turns on the upper switch, in order to minimize the switching loss in the bridge arm circuits.

In an embodiment, when one of the (M-1) transformers with at least one end floating starts to operate, the bridge arm circuit in which the magnetizing current flows out in the two bridge arm with center points connected to the primary winding connection ends turns on the lower switch, while the bridge arm circuit in which the magnetizing current flows into in the two bridge arm with center points connected to the primary winding connection ends turns on the upper switch, in order to minimize the switching loss in the bridge arm circuits. Meanwhile, the other transformer that is already connected to the DC power supply remains the same switch state and continues to operate, allowing the two transformers to be simultaneously connected to the DC power supply.

In an embodiment, the DC-DC converter has an alternate phase-shift full-bridge mode. In this alternate phase-shift full-bridge mode, the (M-1) transformers on the primary side operate sequentially for one or more control periods with the DC power supply voltage and zero voltage; or

within one control period, one of the transformers first operates by connecting to the DC power supply through the corresponding bridge arms, and then short-circuits both ends of the transformer through the corresponding bridge arms. This transformer operate in this manner for one or more control periods. The (M-1) transformers operate in a cyclic sequence.

In an embodiment, the DC-DC converter has a dual-way mode. In the dual-way mode, within one control period, from the first transformer to the (M-1)th transformer, they operate sequentially with the DC power supply voltage, and then the (M-1)th transformer freewheels with zero voltage; or

when switching to the operation of the last transformer, the last two transformers simultaneously connect to the DC power supply and operate; or

within one control period, the (M-1) transformers start a loop from any one of the transformers, operate sequentially by connecting to the corresponding bridge arm with the DC power supply, and after the loop, the last transformer short-circuits the two ends of the last transformer through the corresponding bridge arms and freewheels; or

when switching to the operation of the last transformer, the last two transformers simultaneously connect to the DC power supply and operate.

In an embodiment, the DC-DC converter has a semi-integrated mode. In the semi-integrated mode, within one control period, the first transformer to the (M-1)th transformer operate sequentially with the DC power supply voltage, and then the (M-1) transformers simultaneously operate; or

when switching to the operation of the last transformer, the last two transformers simultaneously connect to the DC power supply and operate; or

in the semi-integrated mode, within one control period, the (M-1) transformers initiate a cycle starting from any one of the transformers, and sequentially connect to the DC power supply through the corresponding bridge arms; at the final portion of the control period, all the (M-1) transformers work in series; or

when switching to the operation of the last transformer, the last two transformers simultaneously connect to the DC power supply and operate.

In an embodiment, the DC-DC converter has a fully-integrated mode. In the fully-integrated mode, within one control period, the first transformer to the (M-1)th transformer operate sequentially with the DC power supply voltage; or

in the fully-integrated mode, the control period is adjusted based on changes in the input voltage and the duty cycle of each transformer, to ensure that the maximum magnetic flux in any one of the (M-1) transformers does not exceed the maximum allowable value of the magnetic material; or

when switching to the operation of the last transformer, the last two transformers simultaneously connect to the DC power supply and operate; or

within one control period, the (M-1) transformers start a loop from any one of the transformers, and operate sequentially by connecting to the DC power supply through the corresponding bridge arms; or

in the fully-integrated mode, the control period is adjusted based on changes in the input voltage and the duty cycle of each transformer, to ensure that the maximum magnetic flux in any one of the (M-1) transformers does not exceed the maximum allowable value of the magnetic material; or

when switching to the operation of the last transformer, the last two transformers simultaneously connect to the DC power supply and operate.

In an embodiment, the DC-DC converter operates in four modes: the alternate phase-shift full-bridge mode, the dual-way mode, the semi-integrated mode, and the fully-integrated mode;
In the alternate phase-shift full-bridge mode, the primary sides of the (M-1) transformers sequentially operate for one or more control periods with the DC power supply voltage and zero voltage.

In the dual-way mode, within one control period, the primary sides of the first transformer to the (M-1)th transformer operate sequentially with the DC power supply voltage, and then the (M-1)th transformer freewheels with zero voltage.

In the semi-integrated mode, within one control period, the first transformer to the (M-1)th transformer sequentially operate with the DC power supply voltage, and then the (M-1) transformers simultaneously operate.

In the fully-integrated mode, within one control period, the first transformer to the (M-1)th transformer sequentially operates with the DC power supply voltage.

The DC-DC converter also includes a main controller, and the main controller is connected to the controlled ends of the bridge arm switches in the M bridge arm circuits. The main controller is configured to control the on/off of the corresponding bridge arm switches in the M bridge arm circuits during the operation of the DC-DC converter, allowing the transformer component to operate in one of the alternate phase-shift full-bridge mode, dual-way mode, semi-integrated mode, and fully-integrated mode or combinations of these modes.

In an embodiment, in the dual-way mode, semi-integrated mode, or fully-integrated mode, when switching to the operation of the last transformer, the last two transformers simultaneously connect to the DC power supply and operate.

In an embodiment, in the fully-integrated mode, the control period is adjusted based on changes in the input voltage and the duty cycle of each transformer to ensure that the maximum magnetic flux in any one of the (M-1) transformers does not exceed the maximum allowable value of the magnetic material.

In an embodiment, the switching between any two modes has a hysteresis with the changes in the equivalent full-bridge duty cycle.

In an embodiment, the DC-DC converter has an alternate full-bridge mode. In this alternate full-bridge mode, within one control period, one of the (M-1) transformers first connects to the DC power supply through the corresponding bridge arms, and then all the bridge arms connected to the transformer are turned off, causing the input ends of the transformer to float. The transformer operates in this manner for one or more control periods, and the (M-1) transformers work in a cyclic sequence.

In an embodiment, the DC-DC converter has a standalone full-bridge mode. In this standalone full-bridge mode, only one of the (M-1) transformers operates. Within one control period, the transformer first connects to the DC power supply through the corresponding bridge arms, and then all the bridge arms connected to the transformer are turned off, causing the input ends of the transformer to float.

In an embodiment, the DC-DC converter has a standalone phase-shift full-bridge mode. In this standalone phase-shift full-bridge mode, only one of the (M-1) transformers operates. Within one control period, the transformer first connects to the DC power supply through the corresponding bridge arms, and then operates by short-circuiting the two ends of the transformer through the corresponding bridge arms.

In another embodiment, the DC-DC converter has at least one of the following modes: standalone phase-shift full-bridge mode, standalone full-bridge mode, alternate full-bridge mode, alternate phase-shift full-bridge mode, dual-way mode, semi-integrated mode, and fully-integrated mode.

In the standalone phase-shift full-bridge mode, only one of the (M-1) transformers operates within one control period. The transformer first connects to the DC power supply through the corresponding bridge arms, and then operates by short-circuiting the two ends of the transformer through the corresponding bridge arms.

In the standalone full-bridge mode, only one of the (M-1) transformers operates within one control period. The transformer first connects to the DC power supply through the corresponding bridge arms, and then all the bridge arms connected to the transformer are turned off, causing the input ends of the transformer to float.

In the alternate full-bridge mode, within one control period, one of the (M-1) transformers operates first by connecting to the DC power supply through the corresponding bridge arms, and then all the bridge arms connected to the transformer are turned off, causing the input ends of the transformer to float. The transformer operates in this manner for one or more control periods, and then the (M-1) transformers cyclically operate in sequence.

In the alternate phase-shift full-bridge mode, within one control period, one of the transformers operates first by connecting to the DC power supply through the corresponding bridge arms, and then operates by short-circuiting the two ends of the transformer through the corresponding bridge arms. The transformer operates in this manner for one or more control periods, and then the (M-1) transformers cyclically operate in sequence.

In the dual-way mode, within one control period, (M-1) transformers initiate a cycle from any one of the transformers, sequentially operating by connecting to the DC power supply through the corresponding bridge arms. At the final portion of the control period, the last transformer freewheels by short-circuiting both ends through the corresponding bridge arms.

In the semi-integrated mode, within one control period, the (M-1) transformers start a cycle from any one of the transformers and sequentially connect to the DC power supply through the corresponding bridge arms. After the cycle, the (M-1) transformers work in series simultaneously.

In the fully-integrated mode, within one control period, the (M-1) transformers initiate a cycle starting from any one of the transformers, and sequentially connect to the DC power supply through their corresponding bridge arms and operate.

The DC-DC converter further includes a main controller, which is connected to the controlled ends of the bridge arm switches in M bridge arm circuits. The main controller is configured to control the on/off status of the corresponding bridge arm switches in the M bridge arm circuits during the operation of the DC-DC converter, allowing the transformer component to operate in one of standalone full-bridge mode, standalone bridge arm mode, alternate full-bridge mode, alternate phase-shift full-bridge mode, dual-way mode, semi-integrated mode, and fully-integrated mode or a combination of these modes.

In an embodiment, in the dual-way mode, the semi-integrated mode or the fully-integrated mode, when switching to the last transformer to operate, the last two transformers simultaneously connect to the DC power supply to operate.

In an embodiment, in the fully-integrated mode, the control period is adjusted based on changes in the input voltage and the duty cycle of each transformer to ensure that the maximum magnetic flux of any one of the (M-1) transformers does not exceed the maximum allowable value of the magnetic material.

In an embodiment, the switching between any two modes has a hysteresis associated with changes in the equivalent full-bridge duty cycle.

In an embodiment, when M is equal to 3, three bridge arm circuits include the first bridge arm switch, the second bridge arm switch, the third bridge arm switch, the fourth bridge arm switch, the fifth bridge arm switch, and the sixth bridge arm switch.

The first bridge arm switch and the second bridge arm switch are connected in series to form the first bridge arm circuit.

The third bridge arm switch and the fourth bridge arm switch are connected in series to form the second bridge arm circuit.

The fifth bridge arm switch and the sixth bridge arm switch are connected in series to form the third bridge arm circuit.

In an embodiment, in the alternate phase-shift full bridge mode, the main controller, when controlling the two bridge arm switches in the second bridge arm circuit to turn on/off, controls the two bridge arm switches in either the first bridge arm circuit or the third bridge arm circuit to turn on/off, and controls the two bridge arm switches in the other bridge arm circuit to turn off.

In the dual-way mode, the main controller controls the second bridge arm switch to turn off first and controls the fifth bridge arm switch to turn on later; controls the first bridge arm switch to turn off first and controls the sixth bridge arm switch to turn on later; the main controller controls the second bridge arm switch to turn on first and controls the sixth bridge arm switch to turn off later; controls the first bridge arm switch to turn on first and controls the fifth bridge arm switch to turn off later.

In an embodiment, in the semi-integrated mode or the fully-integrated mode, the main controller controls the third bridge arm switch to turn on first and controls the first bridge arm switch to turn off later; controls the fourth bridge arm switch to turn on first and controls the second bridge arm switch to turn off later. The main controller controls the second bridge arm switch to turn on first and controls the sixth bridge arm switch to turn off later; controls the first bridge arm switch to turn on first and controls the fifth bridge arm switch to turn off later. The main controller controls the fifth bridge arm switch to turn on first and controls the fourth bridge arm switch to turn on later; controls the sixth bridge arm switch to turn on first and controls the third bridge arm switch to turn on later.

The present application also proposes a power supply device including the DC-DC converter as described above.

The DC-DC converter in the present application is provided with M bridge arm circuits, a transformer component and a rectification and filtering circuit between the power input and power output ends. By using the M bridge arm circuits and the transformer component, the incoming DC power supply voltage is converted into the required voltages and then rectified and filtered before being output to the power output end.

During the operation of the DC-DC converter, the various transformers in the transformer component are operated in coordination with the on/off of the bridge arm switches in the various bridge arm circuits in a timed sequence. They operate alternately according to a certain time ratio, and/or simultaneously. The residual energy of leakage inductance and magnetizing current of the transformer is utilized to charge and discharge, reducing the loss when the bridge arm switches are turned on.

Conventional phase-shift full-bridge architectures adjust the output voltage by changing the duty cycle, but in order to respond to instantaneous change in load, they cannot operate at full duty cycle, which introduces free-wheeling loss. The present application reduces the resistive loss in the bridge arm circuit and the transformer, especially free-wheeling loss, thereby reducing the size of heat sink of the DC-DC converter, which is beneficial for energy conservation and emission reduction.

**BRIEF DESCRIPTION OF THE DRAWINGS**

In order to provide a clearer explanation of the technical solutions in the embodiments of the present application or in the related art, the following will briefly introduce the accompanying drawings that are needed in the descriptions of the embodiments or the related art. It is obvious that the accompanying drawings described below are only some embodiments of the present application. For those skilled in the art, other drawings can be obtained based on the structures shown in these drawings without creative efforts.

FIG. 1 is a schematic diagram of a circuit structure of a DC-DC converter according to an embodiment of the present application.

FIG. 2 is a schematic diagram of the circuit structure of the DC-DC converter according to another embodiment of the present application.

FIG. 3 is a timing diagram of the DC-DC converter operating in an alternate phase-shift full-bridge mode according to the present application.

FIG. 4 is a timing diagram of the DC-DC converter operating in a dual-way mode according to the present application.

FIG. 5 is a timing diagram of the DC-DC converter operating in a semi-integrated mode according to the present application.

FIG. 6 is a timing diagram of the DC-DC converter operating in a fully-integrated mode according to the present application.

FIG. 7 is a schematic diagram of the circuit structure of an existing phase-shift full-bridge architecture DC-DC converter.

FIG. 8 is a timing diagram of the phase-shift full-bridge architecture DC-DC converter in FIG. 7.

Description of reference numbers

**[0057]**

| number | name | number | name |
| --- | --- | --- | --- |
| V-in | power input end | 20 | transformer component |
| V-out | power output end | $Tx_1 \sim Tx_{M-1}$ | transformer |
| 10 | bridge arm circuit | $Tx$ | transformer |
| 11 | first bridge arm circuit | Q11, Q12 | first bridge arm switch, second bridge arm switch |
| 12 | second bridge arm circuit | Q21, Q22 | third bridge arm switch forth bridge arm switch |
| 13 | third bridge arm circuit | Q31, Q32 | fifth bridge arm switch sixth bridge arm switch |

The realization of the purpose, functional characteristics, and advantages of the present application will be further explained with reference to the embodiments and in conjunction with the accompanying drawings.

**DETAILED DESCRIPTION OF THE EMBODIMENTS**

The following will provide a clear and comprehensive description of the technical solution in the embodiments of the present application, with reference to the drawings in the embodiments of the present application. It is evident that the described embodiments are only some rather than all of the embodiments of the present application. Based on the embodiments in the present application, all other embodiments that those skilled in the art can obtain without creative efforts fall within the scope of the present application.

It should be noted that if there are directional terms (such as up, down, left, right, front, rear, etc.) in the embodiments of the present application, these directional terms are only intended to explain the relative positional relationships and movements between components in a specific posture (as shown in the drawings). If this specific posture changes, the directional terms will also change accordingly.

Additionally, if the embodiments of the present application include descriptions like "first," "second," etc., these descriptions are used for the purpose of description and should not be construed as indicating or implying relative importance or implicitly indicating the quantity of the indicated technical features. Therefore, features defined with "first," "second," etc., may explicitly or implicitly include at least one such feature.

Furthermore, the technical solutions in the embodiments can be combined, provided that such combinations are achievable by those skilled in the art. When the combination of technical solutions results in mutual contradictions or cannot be realized, such a combination should be considered non-existent and is not within the scope of the present application.

In this document, the term "and/or" is used to describe the association relationship between related objects, indicating that there can be three relationships. For example, "A and/or B" can represent three situations: A solution, solution including A and B, and B solution.

Additionally, in this document, the character "/" generally indicates that the associated objects is an "or" relationship.

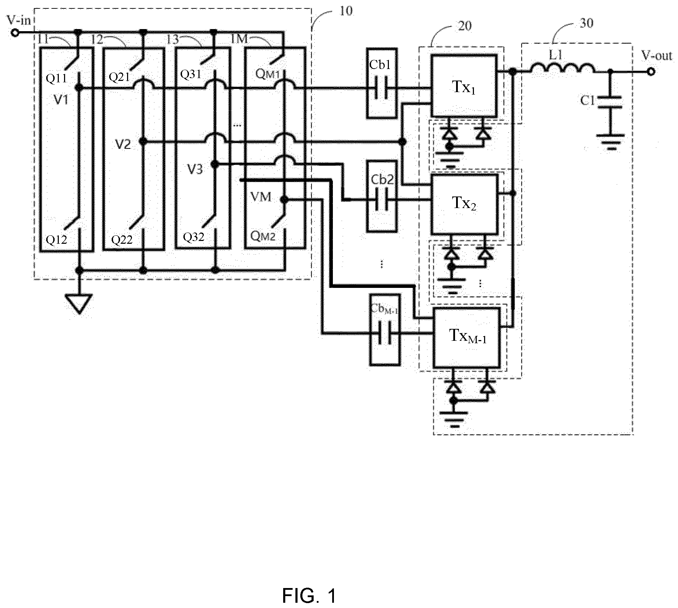

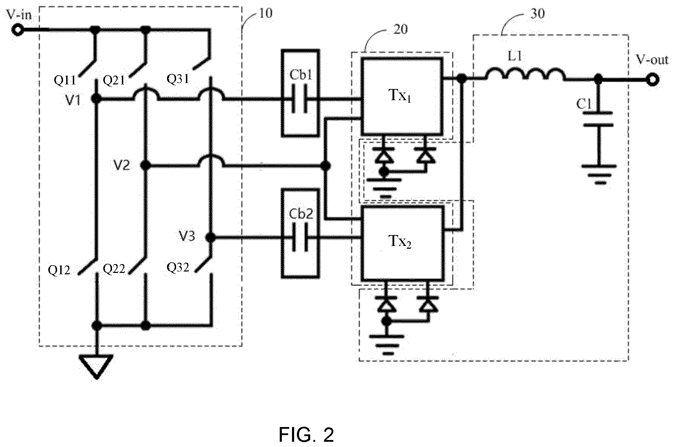

The present application proposes a DC-DC converter. Referring to FIGS. 1 to 6, in an embodiment of the present application, the DC-DC converter includes: a power input end V-in, a power output end V-out, M bridge arm circuits 10, a transformer component 20 and a rectification and filtering circuit 30.

The power input end V-in is configured to be connected to a direct current (DC) power supply.

The power output end V-out is configured to output power.

The input end of the M bridge arm circuits is connected to the power input end V-in. Each bridge arm circuit includes two switch transistors, with two switch transistors in series connection. These bridge arm circuits are connected in parallel. The switch transistors can be implemented using power transistors such as MOSFETs, IGBTs, GANFETs, SiCFETs, etc.

The primary winding connection ends of each transformer of the transformer component are connected to the center points of the M bridge arm circuits.

The transformer component 20 includes (M-1) transformers $Tx_1 \sim Tx_{M-1}$. Among these (M-1) transformers, at least two of them have different turns ratios. Each of these transformers includes two primary winding connection ends. One of the primary winding connection ends of the N-th transformer is connected to the center point of the N-th bridge arm circuit, and the other primary winding connection end of the N-th transformer is connected to the center point of the (N+1)th bridge arm circuit, where $1 \leq N \leq (M-1)$.

Specifically, the first transformer has one of the primary winding connection ends connected to the center point of the first bridge arm circuit and the other primary winding connection end connected to the center point of the second bridge arm circuit. The second transformer has one of the primary winding connection ends connected to the center point of the second bridge arm circuit and the other primary winding connection end connected to the center point of the third bridge arm circuit. This pattern continues, with one of the primary winding connection ends of the (M-1)th transformer connected to the center point of the (M-1)th bridge arm circuit and the other primary winding connection end connected to the center point of the Mth bridge arm circuit. It's important to note that the connections mentioned here refer to electrical connections, and the present application does not impose restrictions on the physical connection methods used for connecting the primary winding ends of adjacent transformers and the corresponding bridge arm center points.

The transformer windings of the transformer component 20 can be set to either step-down or step-up voltage transformation.

The rectification and filtering circuit 30 has input ends connected to the secondary winding connection ends of the transformer component 20, and an output end connected to the power output end. The rectification and filtering circuit 30 can be implemented using components such as rectification diodes, inductors, capacitors, and so on. Specifically, in the DC-DC converter, on the secondary windings of the transformer component, which is an output side, diodes are provided for rectification. The diodes can also be parasitic diodes of synchronous rectification transistors. The specific configuration and connection of the diodes in the circuit can be adjusted adaptively according to the actual application without any specific limitation. On the output side of the DC-DC converter, an inductor L1 and a capacitor C1 are provided.

The inductor L1 is connected in series between the secondary winding connection end or the output end of the rectification diodes and the power output end V-out, and the capacitor C1 is connected to the power output end V-out.

The M bridge arm circuits 10, in conjunction with the transformer component 20, is configured to convert the incoming DC power supply voltage into the required voltages on the secondary winding of the transformer component 20. The required voltages are output to the power output end after rectification and filtering through the rectification and filtering circuit 30, wherein the value of M should be greater than or equal to 3.

The DC-DC converter in the present application is provided with M bridge arm circuits 10, the transformer component 20 and the rectification and filtering circuit 30 between the power input end V-in and the power output end V-out. The M bridge arm circuits, in conjunction with the transformer component, transform the incoming DC power supply voltage into the required voltages, and the output are further rectified and filtered through the rectification and filtering circuit before being supplied to the power output end.

During the operation of the DC-DC converter, the various transformers in the transformer component work in coordination with the bridge arm switches of the different bridge arm circuits being turned on and off in a specific time sequence. They operate alternately according to a certain time ratio, and/or simultaneously. This approach makes use of the residual energy and magnetizing current of the transformers for charging and discharging, thereby reducing loss when the bridge arm switches are turned on.

Existing phase-shift full-bridge architectures adjust the output voltage by changing the duty cycle. However, they are unable to operate at full duty cycle to cope with instantaneous changes in load, which results in freewheeling loss. The present application reduces resistive loss, particularly freewheeling loss, in the bridge arm circuits and transformers. This reduction results in smaller heat sink sizes, contributing to improved energy efficiency and reduced emissions.

By changing the states of the switches in the bridge arm circuit shared by two adjacent transformers, the states of these two adjacent transformers are changed simultaneously. Referring to FIG. 1, in an embodiment, in the initial state, Q11 is turned on, Q12 is turned off, Q21 is turned off, Q22 is turned on, Q31 is turned off, and Q32 is turned on. In an ideal scenario, the voltage across the ends of $Tx_1$ is equal to the DC power supply voltage, while the voltage across the ends of $Tx_2$ is zero. Without changing the states of Q11 and Q12, Q22 is turned off, and Q21 is turned on after a dead time. In an ideal situation, the voltage across the ends of $Tx_1$ becomes zero, and the voltage across the ends of $Tx_2$ becomes equal to the DC power supply voltage.

When one of the (M-1) transformers with at least one end floating starts to operate, the bridge arm circuit in which the magnetizing current flows out in the two bridge arms with center points connected to the primary winding connection ends turns on the lower switch, while the bridge arm circuit in which the magnetizing current flows into in the two bridge arms with center points connected to the primary winding connection ends turns on the upper switch, in order to minimize the switching loss in the bridge arm circuits.

Referring to FIG. 1, in an embodiment, in the initial state, Q11 is turned off, Q12 is turned off. The magnetizing current of $Tx_1$ flows out from the point V1 and flows into the point V2. Since both Q11 and Q12 associated with the point V1 are turned off, V1 is in a floating state, and voltage at the point V1 continuously decreases as the magnetizing current of $Tx_1$ discharges. As the voltage at the point V1 decreases, the switching loss caused by turning on Q12 decreases.

When one of the (M-1) transformers with at least one end floating starts to operate, the bridge arm circuit in which the magnetizing current flows out in the two bridge arms with center points connected to the primary winding connection ends turns on the lower switch, while the bridge arm circuit in which the magnetizing current flows into in the two bridge arms with center points connected to the primary winding connection ends turns on the upper switch, in order to minimize the switching loss in the bridge arm circuits. Meanwhile, another transformer that is already connected to the DC power supply remains the same switch state and continues to operate, allowing both transformers to be simultaneously connected to the DC power supply and operate.

Referring to FIG. 7 to FIG.8, in the traditional phase-shift full-bridge DC-DC converter, the transformer Tx has the primary winding with a turn of 2kN and the secondary winding with a turn of 2k. Taking into account magnetic flux balance, the formula for calculating the maximum magnetic flux $B_{max}$ in the transformer Tx of the traditional phase-shift full-bridge DC-DC converter is as follows:

$$B_{max} = \frac{(VBUS * D * T)}{2kN * Ae * 2}$$

Where VBUS is the direct current supply voltage, D is the equivalent duty cycle of the full-bridge transformer Tx, T is the switching period of the full-bridge DC-DC converter, 2kN is the number of turns in the primary winding of the full-bridge transformer Tx, Ae is the equivalent cross-sectional area of the full-bridge transformer.

Referring to FIG. 1 to FIG. 6, in an embodiment, where M is equal to 3, there is a three-bridge architecture with three bridge arm circuits, and the number of matched transformers is two. These two transformers $Tx_1$ and $Tx_2$ can

operate either with the same magnetic flux or in an asymmetric magnetic flux manner, as long as it ensures that the maximum magnetic flux does not exceed the maximum magnetic flux of the transformer material.

In the case of the three-bridge transformer $Tx_1$, while keeping the equivalent cross-sectional area of a magnetic core of the new transformer unchanged, namely, $Ae_1 = Ae$. The magnetic core of the full-bridge transformer is split in half. This means that half of the primary and secondary windings are placed in half of the space, and the magnetic circuit is added along the cross-section. The turns in the primary and secondary windings of the three-bridge transformer are $kN$ and $k$, respectively, which reduces the resistance by half compared to the full-bridge transformer.

The three-bridge transformer $Tx_2$ utilizes the same magnetic core as the transformer $Tx_1$. The number of turns in the primary winding and the secondary winding can be adjusted to $pkN$ and $k$, respectively, where $p$ is greater than or equal to 1.

Taking into account magnetic flux balance, the formula for calculating the maximum magnetic flux $B_{1max}$ in the transformer $Tx_1$ of the three-bridge architecture DC-DC converter is as follows:

$$B_{1\max} = \frac{(VBUS * D_1 * T)}{kN * Ae_1 * 2} = \frac{(VBUS * D_1 * T)}{kN * Ae * 2}$$

Where:

$VBUS$ is the direct current supply voltage.

$D_1$ is the equivalent duty cycle of the transformer $Tx_1$.

$T$ is the switching period of the three-bridge DC-DC converter.

$kN$ is the number of turns in the primary winding of the transformer $Tx_1$.

$Ae$ and $Ae_1$ are the equivalent cross-sectional areas of transformers $Tx$ and $Tx_1$ , respectively.

$$D_1 = \frac{D}{2}$$

When     , $B_{1max} = B_{max}$, the maximum magnetic flux in the three-bridge transformer $Tx_1$ remains consistent with that of the full-bridge transformer $Tx$, allowing the three-bridge transformer to operate normally.

In the case where the steady-state inductor current is greater than zero, when D is relatively small, $Tx_2$ only needs to operate with a duty cycle D2 after $Tx_1$. Here, $D_2 = p(D-D_1)$, and it should satisfy the condition that D1 + D2 is less than or equal to 1. In this scenario, the total equivalent output of these two transformers is the same as that of a traditional full-bridge transformer. When D1 + D2 is equal to 1, it enters a fully-integrated mode. As D continues to increase, in order to maintain the same effect as the traditional full bridge, D1 will be greater than  $\dfrac{D}{2}$  , and D2 will be equal to 1 - D1. Consequently, a situation arises where the maximum magnetic flux of transformers $Tx_1$ and $Tx_2$ is not the same, and the maximum magnetic flux for each transformer must be controlled within the allowable range of the magnetic materials for the transformer.

Under steady-state conditions and with the same output voltage and current, the three-bridge converter and the full-bridge converter have the same inductor current. To facilitate comparison, the three-bridge converter and the full-bridge converter use transistors with the same resistance values.

The resistance of the primary winding in the three-bridge transformer $Tx_1$ is half that of the full-bridge transformer $Tx$. Because the inductor current and turns ratio in the three-bridge transformer $Tx_1$ are the same as that in the full-bridge transformer when operating independently, the primary current is also the same. The instantaneous resistive loss in the primary winding when the three-bridge transformer $Tx_1$ operates independently is half that of the full-bridge transformer, and the instantaneous resistive loss of the transistors is the same as that of the full-bridge converter.

In the three-bridge transformer $Tx_2$, when the same primary winding space is filled with p times windings, the winding will inevitably become thinner, with the cross-sectional area that is  $\dfrac{1}{p}$  of the original one. The primary resistance is 0.5 * $p^2$ times that of the full-bridge transformer $Tx$. Since the three-bridge converter and the full-bridge converter have the same inductor current, the turns ratio of the three-bridge transformer $Tx_2$ is p times that of the full-bridge transformer

$Tx$. Therefore, when the three-bridge transformer $Tx_2$ operates independently, the primary current is $\frac{1}{p}$ times that of the full-bridge transformer $Tx$. The instantaneous resistive loss in the primary winding of the three-bridge transformer

$Tx_2$ when operating independently is $(\frac{1}{p})^2 * (0.5 * p^2) = 0.5$ times that of the full-bridge transformer $Tx$. The instantaneous loss in the transistors is $\frac{1}{p^2}$ times that of the full-bridge converter, which is less than 1.

When both three-bridge transformers $Tx_1$ and $Tx_2$ operate simultaneously, the primary windings of $Tx_1$ and $Tx_2$ are in series, while the secondary windings are in parallel. The sum of the secondary current is the inductor current.

After calculation, the primary current is $\frac{1}{1+p}$ times that of the full-bridge transformer $Tx$. The total instantaneous loss in the primary windings of $Tx_1$ and $Tx_2$ is $0.5 * \frac{1+p^2}{(1+p)^2}$ times that of the full-bridge transformer $Tx$, which is less than 0.25 times. The instantaneous loss in the primary transistors is $\frac{1}{(1+p)^2}$ times that of the full-bridge converter, which is also less than 0.25 times.

The resistance of the secondary winding of the three-bridge transformers $Tx_1$ and $Tx_2$ is half that of the full-bridge transformer $Tx$. If $Tx_1$ and $Tx_2$ operate independently, the instantaneous loss in their respective secondary windings are half that of the secondary-side instantaneous loss in the full-bridge transformer. If $Tx_1$ and $Tx_2$ operate simultaneously, the secondary windings of $Tx_1$ and $Tx_2$ are in parallel, and the total secondary-side instantaneous loss of the three-bridge transformers is $0.5 * \frac{1+p^2}{(1+p)^2}$ times that of the full-bridge transformer, which is less than 0.25 times.

In the traditional full-bridge architecture, when the inductor current is greater than zero and the output voltage and current are in a steady state, based on inductor current balance, it can be obtained:

$$D = \frac{VOUT * N}{VBUS}$$

Where:

*VBUS* is the direct current supply voltage.

*VOUT* is the output supply voltage.

*N* is the turns ratio between the primary and secondary sides of the full-bridge transformer *Tx*.

*D* is the equivalent duty cycle of the transformer *Tx*.

In the fully-integrated mode, when the inductor current is greater than zero and the output voltage and current are in a steady state, based on inductor current balance, it can be obtained:

$$(\frac{VBUS}{N_1} - VOUT)*D_1 = (VOUT - \frac{VBUS}{N_2})*D_2$$

$$D_2 = 1 - D_1$$

$$N_1 = N$$

$$N_2 = pN$$

Where:

*VBUS* is the direct current supply voltage.

*VOUT* is the output supply voltage.

N, N1, and N2 are the turns ratios between the primary and secondary windings of transformers *Tx*, *Tx,* and *Tx$_2$*.

$D_1$ and $D_2$ are the equivalent duty cycles of transformers $Tx_1$ and $Tx_2$, respectively.

After simplification, it can be obtained:

$$D_1 = \frac{p*D-1}{p-1}$$

$$D_2 = \frac{p}{p-1}(1-D)$$

Assuming the transistors' resistive loss in the phase-shift full-bridge architecture is equal to 1, the transistors' resistive loss in the full-bridge architecture, after removing the freewheeling loss, is represented as D. In the three-bridge architecture, in the fully-integrated mode, the transistors' resistive loss is $D_1 + \frac{D_2}{p^2}$, which can be simplified as $D + \frac{D-1}{p}$. Since D is less than 1, the transistors' resistive loss of the three-bridge architecture in the fully-integrated mode is even lower than the transistors' resistive loss in the full-bridge architecture after removing the freewheeling loss.

In summary, while occupying a similar overall transformer space (compared to the traditional Interleave architecture, which would double the transformer space), both the total primary and secondary resistive losses of three-bridge transformer $Tx_1$ and $Tx_2$ are reduced by at least half when compared to the full-bridge transformer. If skin effect and proximity effect are considered, the total resistive loss of the two transformers in the three-bridge converter will be reduced even more due to the reduced number of turns in the windings.

In the dual-way and semi-integrated modes, the total resistive loss of the bridge arm switch transistors in the primary bridge arm circuit of the three-bridge converter has a certain degree of reduction. In the fully-integrated mode, the total resistive loss of the bridge arm switch transistors in the primary bridge arm circuit of the three-bridge converter is even lower than that of the phase-shifted full-bridge architecture after removing the freewheeling loss.

Referring to FIG. 1 to FIG. 6, in an embodiment of the present application, the transformer $Tx_1$ of the three-bridge DC-DC converter can still have the same number of turns as the transformer in the full-bridge DC-DC converter, with the primary winding with a turn of 2*kN* and the secondary winding with of a turn of 2*k*. In this case, a magnetic core with half the cross-sectional area can be used, i.e., $Ae_1 = 0.5Ae$. Taking into account positive and negative balance of magnetic flux, the formula for calculating the maximum flux $B_{1max}$ in the transformer $Tx_1$ of the three-bridge architecture DC-DC converter is as follows:

$$B_{1\max} = \frac{(VBUS * D_1 * T)}{2kN * Ae_1 * 2} = \frac{(VBUS * D_1 * T)}{kN * Ae * 2}$$

Where:

VBUS is the direct current supply voltage,

$D_1$ is the equivalent duty cycle of the transformer $Tx_1$,

T is the switching period of the three-bridge DC-DC converter,

2kN is the number of turns in the primary winding of the transformer $Tx_1$,

Ae and $Ae_1$ are the equivalent cross-sectional areas of the transformers Tx and $Tx_1$, respectively.

$$D_1 = \frac{D}{2}$$

When              , $B_{1max} = B_{max}$. Since the area of the magnetic core is reduced by half compared to the full-bridge transformer, the winding perimeter of the magnetic core of the transformer $Tx_1$ is 0.707 times that of the full-bridge transformer Tx. With the same winding specifications, the primary-side and secondary-side resistances can be reduced by approximately 29% in this embodiment. This embodiment utilizes less magnetic material compared to the previous embodiment.

The design of the transformer $Tx_2$ in this embodiment can refer to the previous embodiment.

In an embodiment, referring to FIG. 1 to FIG. 6, the DC-DC converter has an alternate phase-shift full-bridge mode, a dual-way mode, a semi-integrated operation mode, and a fully-integrated mode.

The DC-DC converter further includes a main controller, which is connected to the controlled ends of the bridge arm switches in the M bridge arm circuits. The main controller, during the operation of the DC-DC converter, is configured to control on/off of the corresponding bridge arm switches in the M bridge arm circuits, allowing the transformer component 20 to operate in one of the alternate phase-shift full-bridge mode, dual-way mode, semi-integrated mode, and fully-integrated mode or a combination of these modes.

In this embodiment, when the DC-DC converter operates in the alternate phase-shift full-bridge mode, dual-way mode, semi-integrated mode, and fully-integrated mode, these four modes have different timing sequences to accommodate various duty cycle applications. The alternate phase-shift full-bridge mode or dual-way mode can be used when the equivalent full-bridge duty cycle (i.e., the duty cycle required in a traditional full-bridge configuration) is relatively small. When the equivalent full-bridge duty cycle is relatively large, the semi-integrated mode or fully-integrated mode can be employed.

In an embodiment, as shown in FIG. 1 to FIG. 6, when M is 3, the three bridge arm circuits include a first bridge arm switch Q11, a second bridge arm switch Q12, a third bridge arm circuit Q21, a fourth bridge arm switch Q22, a fifth bridge arm switch Q31 and a sixth bridge arm switch Q32.

The first bridge arm switch Q11 and the second bridge arm switch Q12 are connected in series, forming a first bridge arm circuit 11.

The third bridge arm switch Q21 and the fourth bridge arm switch Q22 are connected in series, forming a second bridge arm circuit 12.

The fifth bridge arm switch Q31 and the sixth bridge arm switch Q32 are connected in series, forming a third bridge arm circuit 13.

In an embodiment where the transformer component 20 includes (M-1) transformers, when M is 3, the three bridge arm circuits and two transformers form a three-bridge DC-DC converter. The two transformers are transformers $Tx_1$ and $Tx_2$.

An end of the primary winding of the transformer $Tx_1$ is connected to the bridge arm center point of the first bridge arm circuit 11, and the other end of the primary winding of the transformer $Tx_1$ is connected to the bridge arm center point of the second bridge arm circuit 12.

An end of the primary winding of the transformer $Tx_2$ is connected to the bridge arm center point of the second bridge arm circuit 12, and the other end of the primary winding of the transformer $Tx_2$ is connected to the bridge arm center point of the third bridge arm circuit 13.

The various bridge arm switches can be turned on or off based on different levels of the received driving signals. The bridge arm switches are turned on when receiving high-level driving signals and turned off when receiving low-level driving signals. Alternatively, the bridge arm switches are turned on when receiving low-level driving signals and turned off when receiving high-level driving signals. In this embodiment, the explanation is based on the scenario where the bridge arm switches are turned on upon receiving high-level driving signals and turned off upon receiving low-level driving signals. When each bridge arm switch is turned on or turned off, the primary winding forms a current loop with the connected DC power supply through the turned-on bridge arm switch transistor. This allows the DC current from the connected DC power supply to flow through the primary winding, coupling electrical energy to the secondary winding of the transformer component 20. The voltage at secondary winding is then rectified and filtered by the rectification and filtering circuit 30 before being converted to the supply voltage and is output to the loads. This process achieves the conversion and isolation of the DC power supply. When M is greater than 3, the M bridge arm circuits and the (M-1) transformers form the M-bridge DC-DC converter, and the (M1)th bridge arm switch QM1 and the (M2)th bridge arm switch QM2 are connected in series to form the (M1)th bridge arm circuit 1M.

Referring to FIG. 1, FIG. 2, and FIG. 3, in an embodiment, in the alternate phase-shift full-bridge mode, the main controller controls the on/off of the two bridge arm switches in either the first bridge arm circuit 11 or the third bridge arm circuit 13 and ensures that all two bridge arm switches in the other bridge arm circuit are in the off state, when controlling the on/off of the two bridge arm switches in the second bridge arm circuit 12.

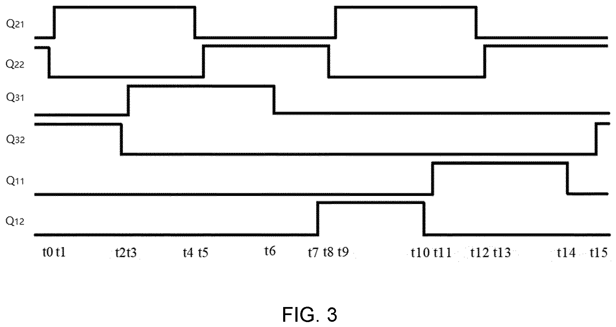

Referring to FIG. 3, FIG. 3 shows the timing diagram of the driving signals received by each bridge arm switch during the alternate phase-shift full-bridge mode. The following analysis is based on the condition that the minimum current through the inductor L1 is greater than zero.

In the alternate phase-shift full-bridge mode, the (M-1) transformers work in sequence at the DC power supply voltage and zero voltage for one or more control periods. In the former part of one control period, the primary-side voltage of one of the transformers is the DC power supply voltage, and in the latter part of one control period, the primary-side voltage of the same transformer is zero.

The transformers operate in this manner for one or more periods, with (M-1) transformers operating in sequence.

In the alternate phase-shift full-bridge mode, within one control period, one of the transformers first operates by connecting to the DC power supply through the corresponding bridge arms and then short-circuits both ends of the transformer through the corresponding bridge arms. The transformer operates in this manner for one or more control periods, with (M-1) transformers operating in sequence.

At time t0, prior to time t0, the fourth bridge arm switch Q22 and the sixth bridge arm switch Q32 are in the on state, while the rest of the bridge arm switches are in the off state. When time t0 arrives, the fourth bridge arm switch Q22 is turned off, and resonance of the leakage inductance begins. The voltage at the bridge arm center point V2 of the second bridge arm circuit 12 starts to increase.

At time t1, the voltage at the bridge arm center point V2 of the second bridge arm circuit 12 reaches the highest point, and the third bridge arm switch Q21 is softly turned on. At this moment, the electrical energy is delivered from the primary winding of the transformer $Tx_2$ to the secondary winding, thereby outputting energy to the outside.

At time t2, the sixth bridge arm switch Q32 is turned off, and the voltage at the bridge arm center point V3 of the third bridge arm circuit 13 begins to increase.

At time t3, the voltage at the bridge arm center point V3 of the third bridge arm circuit 13 reaches the highest point, and the fifth bridge arm switch Q31 is softly turned on. The transformer $Tx_2$, the third bridge arm switch Q21, and the fifth bridge arm switch Q31 start entering the freewheeling state.

At time t4, the third bridge arm switch Q21 is turned off, and resonance of the leakage inductance begins. The voltage at the bridge arm center point V2 of the second bridge arm circuit 12 starts to decrease.

At time t5, the voltage at the bridge arm center point V2 of the second bridge arm circuit 12 reaches the lowest point, and the fourth bridge arm switch Q22 is softly turned on. At this moment, the primary winding of the transformer $Tx_2$ delivers the electrical energy to the secondary winding, thereby outputting energy to the outside.

At time t6, the fifth bridge arm switch Q31 is turned off, and the voltage at the bridge arm center point V3 of the third bridge arm circuit 13 starts to decrease.

Between time t6 and t7, while the transformer $Tx_2$, the fourth bridge arm switch Q22 and the sixth bridge arm switch Q32 are in the freewheeling state, the sixth bridge arm switch Q32 can be turned on for synchronous rectification or not. If the synchronous rectification is turned on, the sixth bridge arm switch Q32 needs to be turned off before time t8.

At time t7, due to the influence of the voltage at the bridge arm center point V2 of the second bridge arm circuit 12 and the voltage at the bridge arm center point V3 of the third bridge arm circuit 13, the bridge arm center point V1 of the first bridge arm circuit 11 automatically reaches the minimum voltage. At this moment, the second bridge arm switch Q12 is softly turned on.

At time t8, the fourth bridge arm switch Q22 is turned off, and resonance of the leakage inductance begins.

The voltage at the bridge arm center point V2 of the second bridge arm circuit 12 starts to increase.

At time t9, the voltage at the bridge arm center point V2 of the second bridge arm circuit 12 reaches the maximum voltage, and the third bridge arm switch Q21 is softly turned on. At this moment, the electrical energy is transferred from the primary winding of transformer $Tx_1$ to the secondary winding, thereby outputting the energy to the outside.

At time t10, the second bridge arm switch Q12 is turned off, and then the voltage at the bridge arm center point V1 of the first bridge arm circuit 11 starts to increase.

At time t11, the voltage at the bridge arm center point V1 of the first bridge arm circuit 11 reaches the maximum voltage, and the first bridge arm switch Q11 is softly turned on. The transformer $Tx_1$, the third bridge arm switch Q21, and the first bridge arm switch Q11 enter the freewheeling state.

At time t12, the third bridge arm switch Q21 is turned off, and resonance of the leakage inductance begins. The voltage at the bridge arm center point V2 of the second bridge arm circuit 12 starts to decrease.

At time t13, the voltage at the bridge arm center point V2 of the second bridge arm circuit 12 reaches the minimum voltage and the fourth bridge arm switch Q22 is softly turned on. At this moment, the electrical energy is delivered from the primary winding of transformer $Tx_1$ to the secondary winding, thereby outputting the energy to the outside.

At time t14, the first bridge arm switch Q11 is turned off, and then the voltage at the bridge arm center point V1 of the first bridge arm circuit 11 starts to decrease.

During the freewheeling time of transformer $Tx_1$, the second bridge arm switch Q12 and the fourth bridge arm switch Q22, which occurs between the time t14 and t15, the second bridge arm switch Q12 can be turned on for synchronous rectification or not. If the synchronous rectification is turned on, the second bridge arm switch Q12 needs to be turned off before time t0.

At time t15, due to the influence of the voltage at the bridge arm center point V2 of the second bridge arm circuit 12 and the voltage at the bridge arm center point V1 of the first bridge arm circuit 11, the center point V3 of the third bridge arm circuit 13 automatically reaches the minimum voltage. The sixth bridge arm switch Q32 is softly turned on.

The above operations are repeated from time t0 to time t15.

If the time applied to the transformer $Tx_2$ is greater than the remanence reset time of the transformer $Tx_1$, alternate operations can allow the transformers to reset automatically. No other methods, such as DC-blocking capacitors Cb1, Cb2, or current sensing, are required.

Assuming that the change in the product of positive operating voltage and time of the transformer $Tx_1$ is VT1, and the change in the product of negative operating voltage and time of the transformer is VT2, the product of voltage and time of the remanence is VT1-VT2. When driven with symmetric positive and negative waveforms, the product of voltage and time of the remanence VT1-VT2 is a small value compared to the change in the product of the positive operating voltage and time VT1 or the change in the product of the negative operating voltage and time VT2. When transformer $Tx_2$ operates in either a positive or negative direction, as long as it exceeds a reasonable time, it will provide a reset for the transformer $Tx_1$ in one direction. Therefore, the transformer $Tx_1$ is always reset.

The same principle applies to the transformer $Tx_2$ as well.

In the above-mentioned embodiment, the time period from t0 to t7 is referred to as Phase A, and the time period from t8 to t15 is referred to as Phase B. The entire working sequence can either follow an A-B-A-B alternating pattern, or it can involve multiple consecutive A phases followed by multiple consecutive B phases. During the time period from t0 to t15, only one pair of the switches (i.e., either the first bridge arm switch Q11 and the second bridge arm switch Q12 or the fifth bridge arm switch Q31 and the sixth bridge arm switch Q32) works, while the other pair is turned off, when the bridge arm switches (i.e., the third bridge arm switch Q21 and the fourth bridge arm switch Q22) are in operation. The operation of the bridge arm switches refers to turn on/ off at a specific duty cycle in accordance with the timing of the driving signal.

Referring to FIG. 1, FIG. 2, and FIG. 4, in an embodiment, in the dual-way mode, the main controller controls the second bridge arm switch Q12 to be turned off first and the fifth bridge arm switch Q31 to be turned on later; it also controls the first bridge arm switch Q11 to be turned off first and the sixth bridge arm switch Q32 to be turned on later.

The main controller controls the second bridge arm switch Q12 to be turned on first and the sixth bridge arm switch Q32 to be turned off later; it also controls the first bridge arm switch Q11 to be turned on first and the fifth bridge arm switch Q31 to be turned off later.

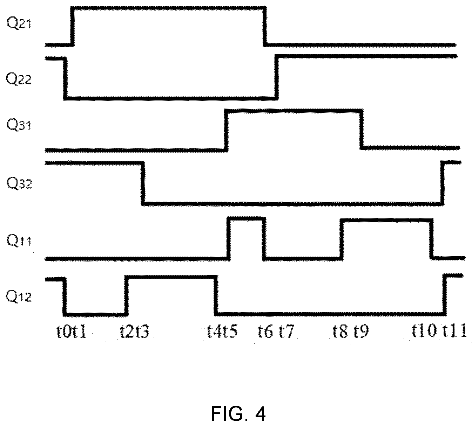

Referring to FIG. 4, FIG. 4 illustrates the timing diagram of the driving signals received by each bridge arm switch in the dual-way mode. The following analysis is based on the condition where the minimum current through the inductor L1 is greater than zero.

In the dual-way mode, within one control period, the first to the (M-1)th transformers operate sequentially at the DC power supply voltage. Subsequently, the (M-1)th transformer continues to operate at zero voltage. In this embodiment, the transformers are counted from right to left, with the first transformer being the one depicted as $Tx_2$, and the second transformer being the one depicted as $Tx_1$.

In the dual-way mode, within one control period, the (M-1) transformers initiate a cycle starting from any one of the transformers and operate sequentially by connecting them to the DC power supply voltage through the corresponding bridge arms. At the final portion of the control period, the last transformer continues to freewheel by short-circuiting both ends through the corresponding bridge arms.

In the dual-way mode, when switching to the operation of the last transformer, the last two transformers are simultaneously connected to the DC power supply voltage and operate.

At time t0, the second bridge arm switch Q12 and the fourth bridge arm switch Q22 are turned off. Resonance of the leakage inductance begins, and the voltage at the bridge arm center point V2 of the second bridge arm circuit 12 starts to increase.

At time t1, in response to that the voltage at the bridge arm center point V2 of the second bridge arm circuit 12 reaches the maximum voltage, the third bridge arm switch Q21 is turned on. The secondary winding of the transformer $Tx_2$ outputs energy externally after rectification.

At time t2, the second bridge arm switch Q12 is turned on, and the secondary winding of the transformer $Tx_1$ outputs energy externally after rectification.

At time t3, the sixth bridge arm switch Q32 is turned off. After the sixth bridge arm switch Q32 is turned off, residual energy from the leakage inductance and magnetizing current charges the bridge arm center point V3 of the third bridge arm circuit 13.

At time t4, the second bridge arm switch Q12 is turned off.

At time t5, after a dead time, the first bridge arm switch Q11 and the fifth bridge arm switch Q31 are turned on. The transformer $Tx_1$, the first bridge arm switch Q11 and the third bridge arm switch Q21 enter the freewheeling state.

At time t6, the first bridge arm switch Q11 and the third bridge arm switch Q21 are turned off. Resonance of the leakage inductance begins, and the voltage at the bridge arm center point V2 of the second bridge arm circuit 12 starts to decrease.

At time t7, after the voltage at the bridge arm center point V2 of the second bridge arm circuit 12 reaches the minimum voltage, the fourth bridge arm switch Q22 is turned on. The secondary winding of the transformer $Tx_2$ outputs energy externally after rectification.

At time t8, the first bridge arm switch Q11 is turned on, and the secondary winding of the transformer $Tx_1$ outputs energy externally after rectification.

At time t9, the fifth bridge arm switch Q31 is turned off. After the fifth bridge arm switch Q31 is turned off, residual energy from the leakage inductance and magnetizing current discharges at the bridge arm center point V3 of the third bridge arm circuit 13.

At time t10, the first bridge arm switch Q11 is turned off.

At time t11, after a dead time, the second bridge arm switch Q12 and the sixth bridge arm switch Q32 are turned on. The transformer $Tx_1$, the second bridge arm switch Q12 and the fourth bridge arm switch Q22 enter the freewheeling state.

The above operations are repeated from time t0 to t11.

In the above embodiment, the main controller controls the timing of driving signals according to the described sequence, and turns on/off at a certain duty cycle.

Referring to FIG. 1, FIG. 2, FIG. 5 and FIG. 6, in an embodiment, in the semi-integrated mode or the fully-integrated mode, the main controller controls the third bridge arm switch Q21 to be turned on first and the first bridge arm switch Q11 to be turned off later; it also controls the fourth bridge arm switch Q22 to be turned on first and the second bridge arm switch Q12 to be turned off later.

The main controller controls the second bridge arm switch Q12 to be turned on first and the sixth bridge arm switch Q32 to be turned off later; it also controls the first bridge arm switch Q11 to be turned on first and the fifth bridge arm switch Q31 to be turned off later.

The main controller controls the fifth bridge arm switch Q31 to be turned on first and the fourth bridge arm switch Q22 to be turned on later; it also controls the sixth bridge arm switch Q32 to be turned on first and the third bridge arm switch Q21 to be turned on later.

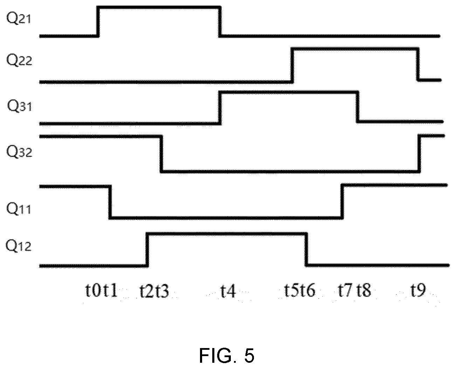

Referring to FIG. 5, FIG. 5 illustrates the timing diagram of the driving signals received by each bridge arm switch in the semi-integrated mode. The following analysis is based on the condition where the minimum current through inductor L1 is greater than zero.

In the semi-integrated mode, within one control period, the first transformer to the (M-1)th transformer operate sequentially with the DC power supply voltage, and then the (M-1) transformers simultaneously operate. In this embodiment, the transformers are counted from right to left, with the first transformer being the one depicted as $Tx_2$, and the second transformer being the one depicted as $Tx_1$.

In the semi-integrated mode, when switching to the operation of the last transformer, the last two transformers simultaneously connect to the DC power supply and operate.

In the semi-integrated mode, within one control period, the (M-1) transformers initiate a cycle starting from any one of the transformers, and sequentially connect to the DC power supply through the corresponding bridge arms; at the final portion of the control period, all the (M-1) transformers work in series.

In the semi-integrated mode, when switching to the operation of the last transformer, the last two transformers simultaneously connect to the DC power supply and operate.

At time t0, the third bridge arm switch Q21 is turned on, and the transformer $Tx_2$ independently outputs energy externally after rectification.

At time t1, the first bridge arm switch Q11 is turned off, and the magnetizing current discharges at the bridge arm center point V1 of the first bridge arm circuit 11.

At time t2, the second bridge arm switch Q12 is turned on. At this moment, the transformer $Tx_1$ independently outputs energy externally after rectification.

At time t3, the sixth bridge arm switch Q32 is turned off. Between t3 and t4, the remaining energy from the leakage inductance and the magnetizing current of $Tx_2$ is utilized to charge at the bridge arm center point V3 of the third bridge arm circuit 13, reducing loss when the fifth bridge arm switch Q31 is turned on.

At time t4, the third bridge arm switch Q21 is turned off, and the fifth bridge arm switch Q31 is turned on. Between t4 and t5, the transformers $Tx_1$ and $Tx_2$ jointly output energy externally after rectification.

At time t5, the fourth bridge arm switch Q22 is turned on. At this moment, the transformer $Tx_2$ independently outputs energy externally after rectification.

At time t6, the second bridge arm switch Q12 is turned off, and the magnetizing current charges at the bridge arm center point V1 of the first bridge arm circuit 11.

At time t7, the first bridge arm switch Q11 is turned on, and the transformer $Tx_1$ independently outputs energy externally after rectification.

At time t8, the fifth bridge arm switch Q31 is turned off. Between t8 and t9, the residual energy and magnetizing current of leakage inductance of the transformer $Tx_2$ are maximally utilized to discharge at the bridge arm center point V3 of the third bridge arm circuit 13, reducing loss when the sixth bridge arm switch Q32 is turned on.

At time t9, the fourth bridge arm switch Q22 is turned off, and the sixth bridge arm switch Q32 is turned on. Between t9 and t0, the transformers $Tx_1$ and $Tx_2$ jointly output energy externally after rectification.

The above operations are repeated from time t0 to t9.

In this mode, $Tx_2 \rightarrow Tx_1 \rightarrow (Tx_1$ and $Tx_2$ work together), there is no freewheeling state where the transformer outputs zero voltage and has current. In the above-mentioned embodiment, the main controller controls the timing of driving signals as described above, and performs turn-on/off with a certain duty cycle.

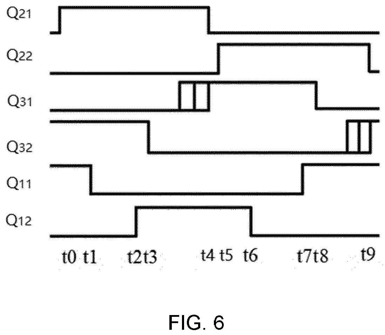

Referring to FIG. 6, the DC-DC converter operates in the fully-integrated mode. FIG. 6 depicts the timing diagram of the driving signals received by each bridge arm switch in the fully-integrated mode. The following analysis is based on the condition where the minimum current through the inductor L1 is greater than zero.

In the fully-integrated mode, within one control period, the first to the (M-1)th transformers operate sequentially at the DC power supply voltage.

In an embodiment, in the fully-integrated mode, within one control period, the (M-1) transformers initiate a cycle starting from any one of the transformers. They sequentially connect to the DC power supply through their corresponding bridge arms.

In the fully-integrated mode, the control period is adjusted based on changes in the input voltage and the duty cycle of each transformer to ensure that the maximum magnetic flux in any one of the (M-1) transformers does not exceed the maximum allowable value of the magnetic material. As the product of the input voltage and the duty cycle increases, the control period is reduced to prevent magnetic saturation and ensure that the maximum magnetic flux in the magnetic material does not exceed the allowable value.

In the fully-integrated mode, when switching to the operation of the last transformer, the last two transformers are simultaneously connected to the DC power supply and operate.

At time t0, in response to that the voltage at the bridge arm center point V2 of the second bridge arm circuit 12 reaches the maximum, the third bridge arm switch Q21 is turned on. The transformer $Tx_2$ independently outputs energy externally after rectification.

At time t1, the first bridge arm switch Q11 is turned off, and the magnetizing current discharges at the bridge arm center point V1 of the first bridge arm circuit 11.

At time t2, the second bridge arm switch Q12 is turned on, and the transformer $Tx_1$ independently outputs energy externally after rectification.

At time t3, the sixth bridge arm switch Q32 is turned off. Between t3 and t4, the residual energy of leakage inductance and magnetizing current of $Tx_2$ is utilized maximally to charge the bridge arm center point V3 of the third bridge arm circuit 13, reducing loss when the fifth bridge arm switch Q31 is turned on. The fifth bridge arm switch Q31 is turned on at a certain time between t3 and t4.

At time t4, the third bridge arm switch Q21 is turned off, and resonance begins. The voltage at the bridge arm center point V2 of the second bridge arm circuit 12 starts to decrease.

At time t5, the voltage at the bridge arm center point V2 of the second bridge arm circuit 12 reaches the minimum voltage, and the fourth bridge arm switch Q22 is turned on. The transformer $Tx_2$ independently outputs energy externally after rectification.

At time t6, the second bridge arm switch Q12 is turned off, and the magnetizing current charges the bridge arm center point V1 of the first bridge arm circuit 11.

At time t7, the first bridge arm switch Q11 is turned on, and the transformer $Tx_1$ independently outputs energy externally after rectification.

At time t8, the fifth bridge arm switch Q31 is turned off. Between t8 and t9, the residual energy of leakage inductance and magnetizing current of $Tx_2$ is maximally utilized to discharge the bridge arm center point V3 of the third bridge arm circuit 13, reducing loss when the sixth bridge arm switch Q32 is turned on. The sixth bridge arm switch Q32 is turned on at a certain time between t8 and t9.

At time t9, the fourth bridge arm switch Q22 is turned off, and resonance begins. The bridge arm center point voltage V2 of the second bridge arm circuit 12 starts to increase.

The above operations are repeated from time t0 to t9.

In this mode, the transformers $Tx_2$ and $Tx_1$ work alternately at the DC power supply voltage, avoiding a free-wheeling state where a transformer outputs zero voltage and has current, resulting in no load current freewheeling loss. In the above-mentioned embodiment, the main controller controls the timing of driving signals as described above, and performs turn-on/off with a certain duty cycle.

Referring to FIG. 1 to FIG. 6, in an embodiment, the transformer component 20 includes (M-1) transformers $Tx_1 \sim Tx_{M-1}$. Among these (M-1) transformers, there can be two or more transformers with different turns ratio. Each of these transformers includes two primary winding connection ends.

One of the primary winding connection ends of the N-th transformer is connected to the bridge arm center point of the N-th bridge arm circuit, and the other primary winding connection end is connected to the bridge arm center point of the (N+1)th bridge arm circuit. In this configuration, $1 \leq N \leq (M-1)$. The main controller controls the on and off of the corresponding bridge arm switches in the M bridge arm circuits, allowing the transformer component 20 to operate in one of the alternate phase-shift full-bridge mode, the dual-way mode, the semi-integrated mode, and fully-integrated mode or a combination of these modes.

In the alternate phase-shift full-bridge mode, the (M-1) transformers work in sequence with the DC power supply voltage and zero voltage applied to their primary sides for one or more control periods.

In the dual-way mode, during one control period, after the first transformer to the (M-1)th transformer operates in sequence with the DC power supply voltage applied to their primary sides, the (M-1)th transformer continues to operate under zero voltage conditions.

In the semi-integrated mode, during one control period, after the first transformer to the (M-1)th transformer operates in sequence with the DC power supply voltage applied to their primary sides, the (M-1) transformers work simultaneously.

In the fully-integrated mode, during one control period, the first transformer to the (M-1)th transformer operates in sequence with the DC power supply voltage applied to their primary sides.

The DC-DC converter also includes a main controller, which is connected to the controlled ends of the bridge arm switches in the M bridge arm circuits. The main controller is configured to control the on and off of the corresponding bridge arm switches in the M bridge arm circuits during the operation of the DC-DC converter. This control enables the transformer component to operate in one of the alternate phase-shift full-bridge mode, the dual-way mode, the semi-integrated mode, and the fully-integrated mode or a combination of these modes.

In the alternate phase-shift full-bridge mode, (M-1) transformers are paired with M bridge arm circuits, and the (M-1) transformers work sequentially in an alternate phase-shift full-bridge manner for one or more control periods. Specifically, within one cycle, the first transformer operates in an alternate phase-shift full-bridge mode for one or more control periods, and then the second transformer operates for one or more control periods, continuing in this manner until the (M-1)th transformer is completed. In the next cycle, the first transformer seamlessly takes over from the (M-1)th transformer, and this pattern continues in a loop.

In the dual-way mode, within one control period, the first to (M-1)th transformers operate sequentially at the direct current power supply voltage, and then the (M-1)th transformer $Tx_{M-1}$ continues in zero voltage mode. In the next control period, the first transformer seamlessly takes over from the (M-1)th transformer to start working.

In the semi-integrated mode, within one control period, the first to (M-1)th transformers operate sequentially at the direct current power supply voltage, and then the (M-1) transformers $Tx_1 \sim Tx_{M-1}$ operate simultaneously (only the upper switch of the first bridge arm circuit and the lower switch of the last bridge arm circuit are turned on, or only the lower switch of the first bridge arm circuit and the upper switch of the last bridge arm circuit are turned on). In the next control period, the first transformer seamlessly takes over to start working. This mode does not have any freewheeling loss.

In the fully-integrated mode, within one control period, the first to (M-1)th transformers operate sequentially at the direct current power supply voltage. In the next control period, the first transformer seamlessly takes over from the (M-1)th transformer to start working. This mode does not have any freewheeling loss.

Referring to FIG. 1 to FIG. 6, in the above-described embodiments, under an M-bridge architecture where M is greater than or equal to three, the DC-DC converter can also be provided with DC-blocking capacitors. Each DC-blocking capacitor is connected in series with the primary winding of the transformer that requires magnetic balancing. The number of DC-blocking capacitors can be set based on the number of transformers. In an embodiment of the DC-DC converter with (M-1) transformers, for example, when M is equal to 3, a DC-blocking capacitor Cb1 can be provided between the bridge arm center point V1 of the first bridge arm circuit 11 and one of the primary winding connection ends of the transformer $Tx_1$, or between the bridge arm center point V2 of the second bridge arm circuit 12 and the other primary winding connection end of the transformer $Tx_1$. Similarly, a DC-blocking capacitor can also be provided between one of the primary winding connection ends of the transformer $Tx_2$ and the bridge arm center point V2 of the second bridge arm circuit 12 or between the other primary winding connection end of the transformer $Tx_2$ and the bridge arm center point V3 of the third bridge arm circuit 13. The (M-1) transformers can be connected to M half-bridges with or without DC-blocking capacitors.

The DC-DC converter described in the present application is not limited to the specific modes and working methods mentioned above. For example, in the present application, the DC-DC converter can include at least one of the following modes: standalone phase-shift full-bridge mode, standalone full-bridge mode, alternate full-bridge mode, alternate phase-shift full-bridge mode, dual-way mode, semi-integrated mode, and fully-integrated mode.

In the standalone phase-shift full-bridge mode, only one of the (M-1) transformers operates. Within one control period, the transformer first operates by connecting to the DC power supply through the corresponding bridge arms. Then, the transformer operates by short-circuiting both ends of the transformer through the corresponding bridge arms.

In the standalone full-bridge mode, only one of the (M-1) transformers operates within one control period. The transformer first connects to the DC power supply through the corresponding bridge arms, and then all the bridge arms connected to the transformer are turned off, causing the input ends of the transformer to float.

In the alternate full-bridge mode, within one control period, one of the (M-1) transformers first connects to the DC power supply through the corresponding bridge arms, and then all the bridge arms connected to the transformer are turned off, causing the input ends of the transformer to float. The transformer operates in this manner for one or more control periods, and the (M-1) transformers work in a cyclic sequence.

In the alternate phase-shift full-bridge mode, within one control period, one of the transformers operates first by connecting to the DC power supply through the corresponding bridge arms, and then operates by short-circuiting the two ends of the transformer through the corresponding bridge arms. The transformer operates in this manner for one or more control periods, and then the (M-1) transformers cyclically operate in sequence.

In the dual-way mode, within one control period, the (M-1) transformers initiate a cycle starting from any one of the transformers. They operate sequentially by connecting to the DC power supply through the corresponding bridge arms. At the final portion of the control period, the last transformer continues to freewheel by short-circuiting both ends through the corresponding bridge arms.

In the semi-integrated mode, within one control period, the (M-1) transformers initiate a cycle starting from any one of the transformers. They operate sequentially by connecting to the DC power supply through the corresponding bridge arms. At the final portion of the control period, the (M-1) transformers work in series.

In the fully-integrated mode, within one control period, the (M-1) transformers initiate a cycle starting from any one transformer. They operate sequentially by connecting to the DC power supply through their corresponding bridge arms.

The DC-DC converter also includes a main controller. The main controller is connected to the controlled ends of the bridge arm switches in each of the M bridge arm circuits. The main controller is configured to control the on and off of the corresponding bridge arm switches in the M bridge arm circuits during the operation of the DC-DC converter, to enable the transformer component to work in one of standalone full-bridge mode, standalone bridge arm mode, alternate full-bridge mode, alternate phase-shift full-bridge mode, dual-way mode, semi-integrated mode, and fully-integrated mode or a combination of these modes.

In this embodiment, in the dual-way mode, semi-integrated mode, or fully-integrated mode, when switching to the last transformer for operation, the last two transformers are simultaneously connected to the DC power supply and operate.

In the fully-integrated mode, the control period is adjusted based on the changes in the input voltage and the duty cycle of each transformer to ensure that the maximum magnetic flux of any one of the (M-1) transformers does not exceed the maximum allowable value of the magnetic material.

Switching between any two modes has a hysteresis associated with the variation in the equivalent full-bridge duty cycle.

Switching from the alternate phase-shift full-bridge mode to the semi-integrated mode has a higher equivalent full bridge duty cycle than that of switching from the semi-integrated mode to the alternate phase-shift full-bridge mode.

Switching from dual-way mode to semi-integrated mode has a higher equivalent full bridge duty cycle than that of switching from semi-integrated mode to dual-way mode.

Switching from semi-integrated mode to fully-integrated mode has a higher equivalent full bridge duty cycle than that of switching from the fully-integrated mode to the semi-integrated mode.

The present application also proposes a power supply device that includes the aforementioned DC-DC converter.

The detailed structure of the DC-DC converter can refer to the above-mentioned embodiments, and is not repeated here. It can be understood that since the above-mentioned DC-DC converter is used in the power supply device of the present application, the embodiments of the power supply device in the present application include all the technical solutions of the embodiments of the DC-DC converter mentioned above, and the achieved technical effects are also completely identical, which are not repeated here.

The above description is only optional embodiments of the present application and does not limit the scope of the present application. Under the concept of the present application, all the equivalent structural transformations made using the contents of the description and drawings of the present application, directly or indirectly applied in other related technical fields, are included in the scope of the present application.

**Claims**

1.   A DC-DC converter, **characterized by** comprising:

   a power input end, configured to be connected to a direct current (DC) power supply;
   a power output end, configured to output power;
   M bridge arm circuits, wherein an input end of the M bridge arm circuits is connected to the power input end;
   a transformer component, comprising (M-1) transformers, wherein the (M-1) transformers are provided with at least two transformers with different turns ratios, each of the transformers comprises two primary winding connection ends, one of the primary winding connection ends of the N-th transformer is connected to a bridge arm center point of the N-th bridge arm circuit, and the other primary winding connection end of the N-th transformer is connected to the bridge arm center point of the (N+1)th bridge arm circuit, where $1 \leq N \leq (M-1)$; and
   a rectification and filtering circuit, wherein input ends of the rectification and filtering circuit are connected to secondary winding connection ends of the transformer component, and an output end of the rectification and filtering circuit is connected to the power output end;
   wherein the M bridge arm circuits and the transformer component are configured to convert the input DC voltage into required voltages on secondary windings of the transformer component, and the required voltages are output to the power output end after rectification and filtering by the rectification and filtering circuit, where M is greater than or equal to 3.

2.   The DC-DC converter according to claim 1, wherein states of two adjacent transformers are simultaneously changed by altering the states of switches in the bridge arm circuit to which the two adjacent transformers are commonly connected.

3.   The DC-DC converter according to claim 1, wherein when one of the (M-1) transformers with at least an end floating starts to operate, the bridge arm circuit in which a magnetizing current flows out in the two bridge arm with center points connected to the primary winding connection ends turns on a lower switch, and the bridge arm circuit in which the magnetizing current flows into in the two bridge arm with center points connected to the primary winding connection ends turns on an upper switch, in order to minimize the switching loss in the bridge arm circuits.

4.   The DC-DC converter according to claim 1, wherein when one of the (M-1) transformers with at least an end floating starts to operate, the bridge arm circuit in which a magnetizing current flows out in the two bridge arms with center points connected to the primary winding connection ends of the one transformer turns on a lower switch, and the bridge arm circuit in which the magnetizing current flows into in the two bridge arms with center points connected to the primary winding connection ends of the one transformer turns on an upper switch, in order to minimize the switching loss in the bridge arm circuits; and another transformer that is already connected to the DC power supply remains the same switch state and continues to operate, allowing the two transformers to be simultaneously connected to the DC power supply.

5.   The DC-DC converter according to claim 1, wherein the DC-DC converter has an alternate phase-shift full-bridge mode, in the alternate phase-shift full-bridge mode, the (M-1) transformers work in sequence with the DC power supply voltage and zero voltage applied to their primary sides for one or more control periods.

6. The DC-DC converter according to claim 1, wherein the DC-DC converter has an alternate phase-shift full-bridge mode, in the alternate phase-shift full-bridge mode, within one control period, one of the transformers first operates by connecting to the DC power supply through the corresponding bridge arms and then short-circuits both ends of the transformer through the corresponding bridge arms, and the transformer operates in this manner for one or more control periods, with (M-1) transformers operating in sequence.

7. The DC-DC converter according to claim 1, wherein the DC-DC converter has a dual-way mode, in the dual-way mode, during one control period, after the first transformer to the (M-1)th transformer operate in sequence with the DC power supply voltage, the (M-1)th transformer continues to operate under zero voltage conditions.

8. The DC-DC converter according to claim 7, wherein in the dual-way mode, when switching to the last transformer for operation, the last two transformers are simultaneously connected to the DC power supply and operate.

9. The DC-DC converter according to claim 1, wherein the DC-DC converter has a dual-way mode, in the dual-way operation, within one control period, the (M-1) transformers start a cycle from any one of the transformers, and sequentially connect to the DC power supply through the corresponding bridge arms, and at the final portion of the control period, the last transformer short-circuits at both ends and freewheels through the corresponding bridge arms.

10. The DC-DC converter according to claim 9, wherein in the dual-way operation, when switching to the last transformer for operation, the last two transformers are simultaneously connected to the DC power supply and operate.

11. The DC-DC converter according to claim 1, wherein the DC-DC converter has a semi-integrated mode, in the semi-integrated mode, within one control period, the first transformer to the (M-1)th transformer operate sequentially at the DC power supply voltage, afterward, the (M-1) transformers work simultaneously.

12. The DC-DC converter according to claim 11, wherein in the semi-integrated mode, when switching to the last transformer for operation, the last two transformers are simultaneously connected to the DC power supply and operate.

13. The DC-DC converter according to claim 1, wherein the DC-DC converter has a semi-integrated mode, in the semi-integrated mode, within one control period, the (M-1) transformers initiate a cycle starting from any one of the transformers and sequentially connect to the DC power supply through the corresponding bridge arms, and all the (M-1) transformers work in series at the final portion of the control period.

14. The DC-DC converter according to claim 13, wherein in the semi-integrated mode, when switching to the last transformer for operation, the last two transformers are simultaneously connected to the DC power supply and operate.

15. The DC-DC converter according to claim 1, wherein the DC-DC converter has a fully-integrated mode, in the fully-integrated mode, within one control period, the first transformer to (M-1)th transformer operate sequentially at the direct current power supply voltage.

16. The DC-DC converter according to claim 15, wherein in the fully-integrated mode, the control period is adjusted based on changes in an input voltage and a duty cycle of each transformer to ensure that the maximum magnetic flux in any one of the (M-1) transformers does not exceed the maximum allowable value of magnetic material.

17. The DC-DC converter according to claim 15, wherein in the fully-integrated mode, when switching to the operation of the last transformer, the last two transformers are simultaneously connected to the DC power supply.

18. The DC-DC converter according to claim 1, wherein the DC-DC converter has a fully-integrated mode, in the fully-integrated mode, within one control period, the (M-1) transformers initiate a cycle starting from any one transformer, and sequentially connect to the DC power supply through the corresponding bridge arms.

19. The DC-DC converter according to claim 18, wherein in the fully-integrated mode, the control period is adjusted based on changes in an input voltage and a duty cycle of each transformer to ensure that the maximum magnetic flux in any one of the (M-1) transformers does not exceed the maximum allowable value of magnetic material.

20. The DC-DC converter according to claim 18, wherein in the fully-integrated mode, when switching to the operation of the last transformer, the last two transformers are simultaneously connected to the DC power supply.

21. The DC-DC converter according to claim 1, wherein the DC-DC converter has an alternate phase-shift full-bridge mode, a dual-way mode, a semi-integrated mode, and a fully-integrated mode,

in the alternate phase-shift full-bridge mode, the (M-1) transformers work in sequence with the DC power supply voltage and zero voltage applied to their primary sides for one or more control periods;
in the dual-way mode, during one control period, after the first transformer to the (M-1)th transformer operates in sequence with the DC power supply voltage applied to their primary sides, the (M-1)th transformer continues to operate under zero voltage conditions;
in the semi-integrated mode, during one control period, after the first transformer to the (M-1)th transformer operates in sequence with the DC power supply voltage applied to their primary sides, the (M-1) transformers work simultaneously;
in the fully-integrated mode, during one control period, the first transformer to the (M-1)th transformer operates in sequence with the DC power supply voltage applied to their primary sides,
the DC-DC converter also comprises a main controller, which is connected to the controlled ends of the bridge arm switches in the M bridge arm circuits, the main controller is configured to control the on and off of the corresponding bridge arm switches in the M bridge arm circuits during the operation of the DC-DC converter, this control enables the transformer component to operate in one of the alternate phase-shift full-bridge mode, the dual-way mode, the semi-integrated mode, and the fully-integrated mode or a combination of these modes.

22. The DC-DC converter according to claim 21, wherein in the dual-way mode, semi-integrated mode, or fully-integrated mode, when switching to the last transformer for operation, the last two transformers are simultaneously connected to the DC power supply and operate.

23. The DC-DC converter according to claim 21, wherein in the fully-integrated mode, the control period is adjusted based on the changes in the input voltage and the duty cycle of each transformer to ensure that the maximum magnetic flux of any one of the (M-1) transformers does not exceed the maximum allowable value of the magnetic material.

24. The DC-DC converter according to claim 21, wherein switching between any two modes has a hysteresis associated with the variation in the equivalent full-bridge duty cycle.

25. The DC-DC converter according to claim 1, wherein the DC-DC converter has an alternate full-bridge mode, in the alternate full-bridge mode, within one control period, one of the (M-1) transformers first connects to the DC power supply through the corresponding bridge arms, and then all the bridge arms connected to the transformer are turned off, causing the input ends of the transformer to float. The transformer operates in this manner for one or more control periods, and the (M-1) transformers work in a cyclic sequence.

26. The DC-DC converter according to claim 1, wherein the DC-DC converter has a standalone full-bridge mode, in the standalone full-bridge mode, only one of the (M-1) transformers operates, within one control period, the transformer first connects to the DC power supply through the corresponding bridge arms, and then all the bridge arms connected to the transformer are turned off, causing the input ends of the transformer to float.

27. The DC-DC converter according to claim 1, wherein the DC-DC converter has a standalone phase-shift full-bridge mode, in the standalone phase-shift full-bridge mode, only one of the (M-1) transformers operates, within one control period, the transformer first operates by connecting to the DC power supply through the corresponding bridge arms, then the transformer operates by short-circuiting both ends of the transformer through the corresponding bridge arms.

28. The DC-DC converter according to claim 1, wherein the DC-DC converter has at least one of a standalone phase-shift full-bridge mode, a standalone full-bridge mode, an alternate full-bridge mode, an alternate phase-shift full-bridge mode, a dual-way mode, a semi-integrated mode, and a fully-integrated mode,

in the standalone phase-shift full-bridge mode, only one of the (M-1) transformers operates, within one control period, the transformer first operates by connecting to the DC power supply through the corresponding bridge arms, and then operates by short-circuiting both ends of the transformer through the corresponding bridge arms;
in the standalone full-bridge mode, only one of the (M-1) transformers operates, within one control period, the transformer first operates by connecting to the DC power supply through the corresponding bridge arms, and then all the bridge arms connected to the transformer are turned off to enable the input ends of the transformer to float;

in the alternate full-bridge mode, within one control period, one of the (M-1) transformers operates first by connecting to the DC power supply through the corresponding bridge arms, then all the bridge arms connected to the transformer are turned off to enable the input ends of the transformer to float, the transformer operates in this manner for one or more control periods, and all the (M-1) transformers operate sequentially in a cyclic manner;

in the alternate phase-shift full-bridge mode, within one control period, one of the transformers operates first by connecting to the DC power supply through the corresponding bridge arms and then operates by short-circuiting both ends of the transformer through the corresponding bridge arms, the transformer operates in this manner for one or more control periods, and all the (M-1) transformers operate sequentially in a cyclic manner;

in the dual-way mode, within one control period, (M-1) transformers initiate a cycle from any one of the transformers, and sequentially operate by connecting to the DC power supply through the corresponding bridge arms, at the final portion of the control period, the last transformer freewheels by short-circuiting both ends through the corresponding bridge arms;

in the semi-integrated mode, within one control period, the (M-1) transformers start a cycle from any one of the transformers and sequentially operate by connecting to the DC power supply through the corresponding bridge arms, afterward, the (M-1) transformers operate in series simultaneously; and

in the fully-integrated mode, within one control period, the M-1 transformers initiate a cycle starting from any one transformer and sequentially connect to the DC power supply through their corresponding bridge arms,

the DC-DC converter further comprises a main controller, the main controller is connected to controlled ends of the bridge arm switches in each of the M bridge arm circuits, respectively; the main controller is configured to control the on/off of the corresponding bridge arm switches in the M bridge arm circuits during the operation of the DC-DC converter, allowing the transformer component to operate in one of the standalone phase-shift full-bridge mode, standalone full-bridge mode, alternate full-bridge mode, alternate phase-shift full-bridge mode, dual-way mode, semi-integrated mode, and fully-integrated mode or a combination thereof.

29. The DC-DC converter according to claim 28, wherein in the dual-way mode, semi-integrated mode, or fully-integrated mode, when switching to the last transformer for operation, the last two transformers are simultaneously connected to the DC power supply and operate.

30. The DC-DC converter according to claim 28, wherein in the fully-integrated mode, the control period is adjusted based on the changes in the input voltage and the duty cycle of each transformer to ensure that the maximum magnetic flux of any one of the (M-1) transformers does not exceed the maximum allowable value of the magnetic material.

31. The DC-DC converter according to claim 28, wherein switching between any two modes has a hysteresis associated with the variation in the equivalent full-bridge duty cycle.

32. The DC-DC converter according to claim 28, wherein when M is equal to 3, the three bridge arm circuits comprises a first bridge arm switch, a second bridge arm switch, a third bridge arm switch, a fourth bridge arm switch, a fifth bridge arm switch, and a sixth bridge arm switch, the first bridge arm switch and the second bridge arm switch are connected in series to form a first bridge arm circuit; the third bridge arm switch and the fourth bridge arm switch are connected in series to form a second bridge arm circuit; and the fifth bridge arm switch and the sixth bridge arm switch are connected in series to form a third bridge arm circuit,

33. The DC-DC converter according to claim 32, wherein in the alternate phase-shift full bridge mode, the main controller, when controlling the two bridge arm switches in the second bridge arm circuit to turn on/off, controls the two bridge arm switches in either the first bridge arm circuit or the third bridge arm circuit to turn on/off, and controls the two bridge arm switches in the other bridge arm circuit to turn off.

34. The DC-DC converter according to claim 32, wherein in the dual-way mode, the main controller controls the second bridge arm switch to turn off first and controls the fifth bridge arm switch to turn on later; controls the first bridge arm switch to turn off first and controls the sixth bridge arm switch to turn on later; the main controller controls the second bridge arm switch to turn on first and controls the sixth bridge arm switch to turn off later; and controls the first bridge arm switch to turn on first and controls the fifth bridge arm switch to turn off later.

35. The DC-DC converter according to claim 32, wherein in the fully-integrated mode, a main controller controls the third bridge arm switch to be turned on first and then controls the first bridge arm switch to be turned off; controls the fourth bridge arm switch to be turned on first and then controls the second bridge arm switch to be turned off;

the main controller controls the second bridge arm switch to be turned on first and then controls the sixth bridge arm switch to be turned off; controls the first bridge arm switch to be turned on first and then controls the fifth bridge arm switch to be turned off; and

the main controller controls the fifth bridge arm switch to be turned on first and then controls the fourth bridge arm switch to be turned on; controls the sixth bridge arm switch to be turned on first and then controls the third bridge arm switch to be turned on.

36. A power supply device, **characterized by** comprising the DC-DC converter according to any one of claims 1 to 35.

FIG. 1

FIG. 2

FIG. 3

FIG. 4

FIG. 5

FIG. 6

FIG. 7

(Prior Art)

FIG. 8

(Prior Art)

## INTERNATIONAL SEARCH REPORT

| International application No. |
|---|
| **PCT/CN2022/098575** |

### A. CLASSIFICATION OF SUBJECT MATTER

H02M 3/335(2006.01)i

According to International Patent Classification (IPC) or to both national classification and IPC

### B. FIELDS SEARCHED

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNTXT; ENTXT; CNKI; IEEE; Web of science; 直流, 转换器, 变换器, 变换电路, 移相, 相移, 全桥, 损耗, 开关, 桥臂, 变压器, 双模, 整合, 占空比, dc, direct current, dc-dc, convert+, phase shift, full bridge, loss, switch, bridge arm, transformer, dual mode, duty cycle, pwm

### C. DOCUMENTS CONSIDERED TO BE RELEVANT

| Category* | Citation of document, with indication, where appropriate, of the relevant passages | Relevant to claim No. |
|---|---|---|
| PX | CN 113258787 A (SHENZHEN XINSI ELECTRIC ENERGY TECHNOLOGY CO., LTD.) 13 August 2021 (2021-08-13) claims 1-9, description paragraphs 3-174, figures 1-8 | 1-18, 20, 21, 36 |
| X | US 2010045113 A1 (HITACHI MEDICAL CORP.) 25 February 2010 (2010-02-25) description, paragraphs 38-148, and figures 2-7 | 1-36 |
| X | CN 105680699 A (SOUTHEAST UNIVERSITY) 15 June 2016 (2016-06-15) description, paragraphs 3-56, figures 1-7 | 1-36 |
| X | CN 106505869 A (SOUTHEAST UNIVERSITY) 15 March 2017 (2017-03-15) description, paragraphs 3-47, figures 1-10 | 1-36 |
| A | US 2020328684 A1 (INFINEON TECHNOLOGIES AUSTRIA AG) 15 October 2020 (2020-10-15) entire document | 1-36 |
| A | US 2014104891 A1 (UNIV SEOUL NAT R & DB FOUND et al) 17 April 2014 (2014-04-17) entire document | 1-36 |
| A | CN 102931843 A (CHEN, Zhong) 13 February 2013 (2013-02-13) entire document | 1-36 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2022** | **23 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098575**

| Patent document cited in search report | | | Publication date (day/month/year) | Patent family member(s) | | | Publication date (day/month/year) |
|---|---|---|---|---|---|---|---|
| CN | 113258787 | A | 13 August 2021 | CN | 215010058 | U | 03 December 2021 |
| US | 2010045113 | A1 | 25 February 2010 | JP | WO2007004565 | A1 | 29 January 2009 |
| | | | | WO | 2007004565 | A1 | 11 January 2007 |
| | | | | US | 7928600 | B2 | 19 April 2011 |
| | | | | JP | 5020077 | B2 | 05 September 2012 |
| CN | 105680699 | A | 15 June 2016 | CN | 105680699 | B | 23 February 2018 |
| CN | 106505869 | A | 15 March 2017 | | None | | |
| US | 2020328684 | A1 | 15 October 2020 | EP | 3723258 | A1 | 14 October 2020 |
| | | | | CN | 111800014 | A | 20 October 2020 |
| | | | | US | 11075582 | B2 | 27 July 2021 |
| US | 2014104891 | A1 | 17 April 2014 | KR | 20140047981 | A | 23 April 2014 |
| | | | | US | 9118254 | B2 | 25 August 2015 |
| CN | 102931843 | A | 13 February 2013 | CN | 102931843 | B | 11 February 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202121328038

- CN 202110663929